# EUROPÄISCHE PATENTANMELDUNG

(11) **EP 1 898 117 A2**
(43) Veröffentlichungstag der Anmeldung: **12.03.2008**
(21) Anmeldenummer: 07016959.4
(22) Anmeldetag: 30.08.2007
(51) Int. Cl.: F16D 69/02

(54) **Vorrichtung, insbesondere Reibungskupplung oder Bremse, sowie Verfahren zum Herstellen einer Vorrichtung**

(30) Priorität: 07.09.2006 DE 102006042483; 10.08.2007 DE 102007037682
(71) Anmelder: ZF Friedrichshafen AG, 88038 Friedrichshafen (DE)
(72) Erfinder: Wickel, Christian, 97797 Wartmannsroth (DE)

(57) **Zusammenfassung**

Die Erfindung betrifft eine Vorrichtung (1), bei der mindestens zwei Bauteile (2, 3, 4) bei bestimmungsgemäßem Gebrauch reibend zusammenwirken, um ein Drehmoment zu übertragen, insbesondere eine Reibungskupplung oder eine Bremse, wobei zur Verhinderung einlaufbedingter Schwankungen des Reibwerts mindestens eines der Bauteile (2, 3, 4) an ihrer der Reibung ausgesetzten Oberfläche (2', 3', 4') mit einer Beschichtung versehen ist. Um ein verbessertes Einlaufverhalten zu erreichen, sieht die Erfindung vor, dass die Beschichtung aus Silikon besteht oder Silikon enthält. Des weiteren betrifft die Erfindung ein Verfahren zum Herstellen einer solchen Vorrichtung.

## Beschreibung

Die Erfindung betrifft eine Vorrichtung, bei der mindestens zwei Bauteile bei bestimmungsgemäßem Gebrauch reibend zusammenwirken, um ein Drehmoment zu übertragen, insbesondere eine Reibungskupplung oder eine Bremse, wobei zur Verhinderung einlaufbedingter Schwankungen des Reibwerts mindestens eines der Bauteile an ihrer der Reibung ausgesetzten Oberfläche mit einer Beschichtung versehen ist. Des weiteren betrifft die Erfindung ein Verfahren zum Herstellen einer solchen Vorrichtung.

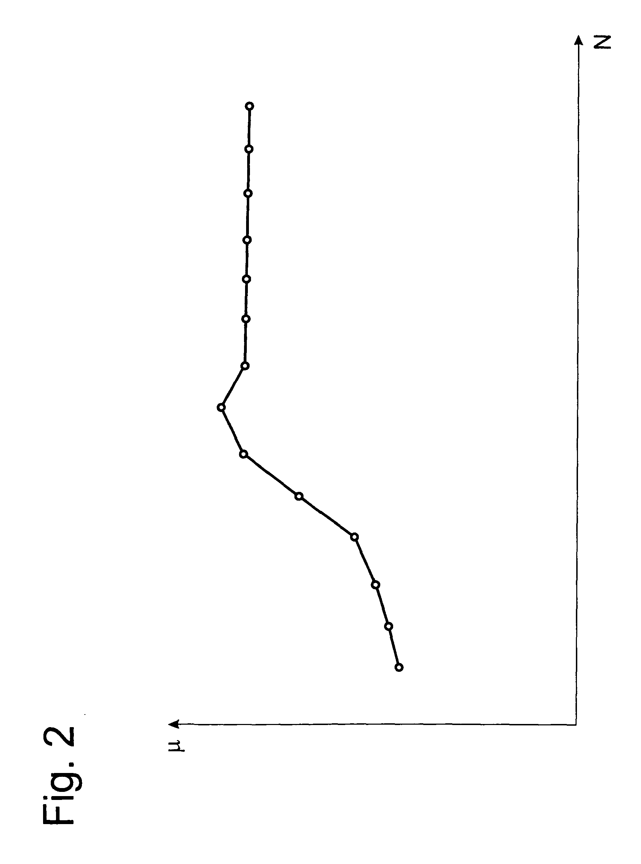

Es ist bekannt, dass der Reibkoeffizient (Reibwert) einer Reibpaarung abhängig von dem Zustand der Reibpartner ist. Insbesondere weist eine Reibpaarung, beispielsweise in einer Reibungskupplung, in Abhängigkeit der Gebrauchsdauer bzw. der Anzahl der Lastwechselvorgänge einen veränderlichen Reibwert auf. In Fig. 2 ist der Zusammenhang zwischen dem Reibwert µ und der Anzahl der Lastwechselvorgänge N in einer Reibungskupplung schematisch dargstellt. In neuem Zustand der Kupplung, d. h. insbesondere bei neuen Reibbelägen, liegt der Reibkoeffizient noch relativ niedrig. Allmählich steigt er mit der Anzahl der Lastwechsel an, bis er auf einem weitgehend konstanten Niveau liegt.

Bei neuen Reibbelägen ist also der anfängliche Reibwert teilweise erheblich niedriger als im eingelaufenen Zustand. Die Auslegung der Vorrichtung, insbesondere einer Reibungskupplung, erfolgt allerdings zumeist für den eingelaufenen Zustand, d. h. für den Fall, dass der Reibwert seinen hohen Dauerwert erreicht hat. In nachteiliger Weise muss daher ein höherer Sicherheitsfaktor bei der Kupplungsauslegung zugrunde gelegt werden, damit auch im Einlaufzustand der Reibbeläge ein zufrieden stellendes Kupplungsverhalten sichergestellt ist. Bekannt ist es auch, dass eine Schirmung der Anpressplatte zur Erhöhung des Reibradiusses vorgesehen werden kann, um dem genannten Problem zu begegnen.

Aus der DE 100 02 261 A1 ist es bekannt, zur Abhilfe des genannten Problems den zum Einsatz kommenden Reibbelag mit einer Oberflächenbeschichtung zu versehen. Dabei wird als Beschichtungsmaterial ein Substrat auf Acrylbasis vorgesehen. Vorgeschlagen wird auch, eines oder mehrere der Materialien Quarz, Kieselgel, Silikat, Oxidkeramik und organische oder anorganische Polymere zuzusetzen.

Es hat sich herausgestellt, dass diese Lösungen zwar eine gewisse Verbesserung bringen, dass jedoch weiterhin Nachteile bestehen. Ein Problem, das beim Beschichten der Reibfläche auftritt, ist, dass es infolge der Beschichtung zu einem Verkleben der bei bestimmungsgemäßem Gebrauch reibend zusammenwirkenden Reibpartner kommen kann, das das Betriebsverhalten während der Einlaufphase der Vorrichtung negativ beeinflusst.

Der Erfindung liegt daher die **Aufgabe** zugrunde, eine Vorrichtung der eingangs genannten Art sowie ein zugehöriges Verfahren zu deren Herstellung zu schaffen, die diesbezüglich eine Verbesserung bringen. Es soll also auf die vorteilhafte Beschichtung der Reibpartner nicht verzichtet werden, es sollen sich jedoch die beobachteten Nachteile nicht einstellen, insbesondere das Verkleben der zusammenwirkenden Bauteile.

Die **Lösung** dieser Aufgabe durch die Erfindung ist dadurch gekennzeichnet, dass die Beschichtung der beteiligten Reibpartner aus Silikon besteht oder Silikon enthält. Bevorzugt ist das Silikon ein Silikonelastomer oder ein Silikonharz.

Vorzugsweise ist eine Reibfläche eines Reibbelags der Vorrichtung beschichtet, also insbesondere der Reibungskupplung oder der Bremse. Es kann alternativ oder additiv auch vorgesehen sein, dass mindestens eine Gegenreibfläche des Reibbelags beschichtet ist, insbesondere eine Anpressplatte und/oder ein Schwungrad der Kupplungsvorrichtung.

Die Beschichtung kann vollflächig auf die der Reibung ausgesetzte Oberfläche des Bauteils aufgebracht sein. Es lassen sich aber auch gute Ergebnisse erzielen, wenn die Beschichtung nur auf einen Teil der der Reibung ausgesetzten Oberfläche des Bauteils aufgebracht ist.

Durch nur teilflächige Beschichtung kann der Reibwert gezielt eingestellt werden. Ferner kann hierdurch Einfluss auf die Rupfneigung, also auf Schwingungen beim Einkuppeln, einer Reibungskupplung genommen werden.

Das Verfahren zum Herstellen einer Vorrichtung, bei der mindestens zwei Bauteile bei bestimmungsgemäßem Gebrauch reibend zusammenwirken, um ein Drehmoment zu übertragen, insbesondere einer Reibungskupplung oder einer Bremse, wobei zur Verhinderung einlaufbedingter Schwankungen des Reibwerts mindestens eines der Bauteile an ihrer der Reibung ausgesetzten Oberfläche mit einer Beschichtung versehen wird, zeichnet sich erfindungsgemäß dadurch aus, dass vor der bestimmungsgemäßen Benutzung der Vorrichtung eine Beschichtung aus Silikon oder eine Silikon enthaltende Beschichtung auf die Oberfläche mindestens eines Bauteils aufgebracht wird.

Die Beschichtung kann - wie gesagt - auch nur auf einen Teil der der Reibung ausgesetzten Oberfläche des Bauteils aufgebracht werden. Hierzu haben sich eine Beschichtung mittels Siebdruck, eine Beschichtung mittels Tampondruck bzw. eine Beschichtung mittels einer profilierten Auftragwalze besonders bewährt. Damit kann ein genau definierter Teilbereich der zu beschichtenden Oberfläche definiert werden, auf den die Beschichtung dann mittels der genannten Verfahren aufgebracht wird.

Ist die Beschichtung aufgebracht, kommen für die Aushärtung verschiedene Verfahren in Frage. Eine Lösung besteht darin, dass das mit der Beschichtung versehene Bauteil nach dem Auftragen der Beschichtung bei Raumtemperatur aushärtet. Möglich ist es auch, dass eine Aushärtung bei gegenüber Raumtemperatur erhöhter Temperatur erfolgt. Ebenfalls besteht eine bevorzugte Möglichkeit darin, dass das mit der Beschichtung versehene Bauteil nach dem Auftragen der Beschichtung einer Aushärtung durch Beaufschlagung mit UV-Licht unterzogen wird.

Eine weitere vorteilhafte Verfahrensweise zur Umsetzung der Erfindung besteht darin, dass auf die Oberfläche des mindestens einen Bauteils mindestens zwei unterschiedliche Beschichtungs-Komponenten aufgebracht werden, die miteinander eine chemische Reaktion eingehen.

Die Einstellung der Viskosität der aufzubringenden Schicht kann dadurch erfolgen und dadurch optimiert werden, dass vor der Aufbringung der Beschichtung das Beschichtungsmaterial mit einem Lösungsmittel versehen wird. Hierfür kann ein organisches Lösungsmittel oder auch Wasser verwendet werden, wobei sich die letztgenannte Möglichkeit durch besondere Umweltverträglichkeit auszeichnet.

Durch die vorgeschlagene Ausgestaltung der Vorrichtung bzw. das Verfahren wird erreicht, dass die Bauteile der Vorrichtung, die bei bestimmungsgemäßer Benutzung reibend zusammenwirken, einen erhöhten Anfangsreibwert infolge der aufgebrachten Beschichtung aufweisen.

Die vorgeschlagenen Beschichtungsmaterialien in Form eines Silikons sind sehr gut temperaturbeständig. Weiterhin ist die Gefahr eines Verklebens der Reibpartner praktisch ausgeschlossen.

In der Zeichnung ist ein Ausführungsbeispiel der Erfindung dargestellt. Es zeigen:
- Fig. 1: den Radialschnitt durch eine Kraftfahrzeugkupplungsvorrichtung,
- Fig. 2: den Verlauf des Reibwerts über der Zahl der Lastwechsel einer Kupplungsvorrichtung.

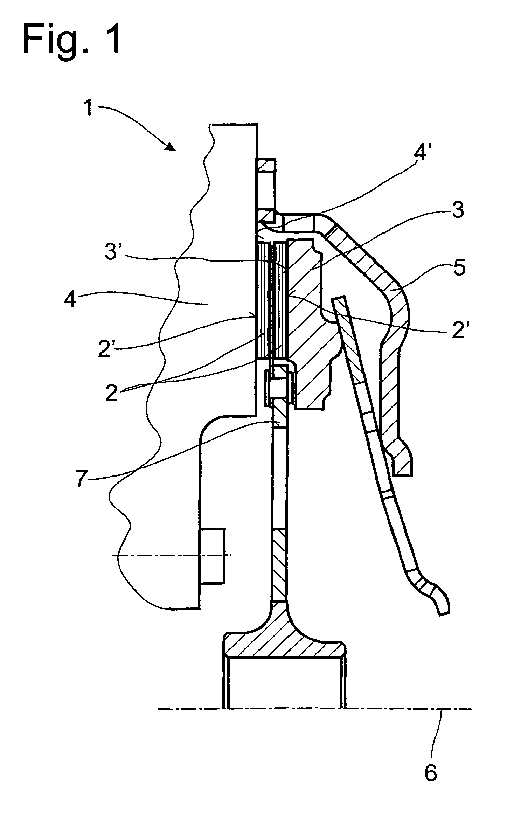

In Fig. 1 ist eine Kupplungsvorrichtung 1 zu sehen, die in üblicher Weise aufgebaut ist. Ein Kupplungsgehäuse 5 ist mit einem Schwungrad 4 einer Brennkraftmaschine drehfest verbunden, wobei das Gehäuse 5 samt Schwungrad 4 um eine Drehachse 6 rotieren können. In dem Gehäuse 5 ist eine Anpressplatte 3 angeordnet, die drehfest zum Gehäuse 5, jedoch axial verschieblich gelagert ist. Zwischen der Anpressplatte 3 und dem Schwungrad 4 ist eine Kupplungsscheibe 7 angeordnet, die beidseitig mit je einem Reibbelag 2 versehen ist.

Wird die Anpressplatte 3 axial in Richtung Schwungrad 4 gedrückt, kommt es aufgrund des Reibschlusses zwischen Reibbelag 2 und Schwungrad 4 bzw. zwischen Reibbelag 2 und Anpressplatte 3 zur Übertragung eines Drehmoments vom Schwungrad 4 zur Kupplungsscheibe 7, die - was nicht dargestellt ist - mit einer Getriebewelle drehfest verbunden ist.

Wie aus Fig. 2 ersichtlich ist, ist der Reibungskoeffizient µ über der Anzahl der Lastwechsel N, also letztlich über der Gebrauchsdauer, relativ stark variabel. Um diesen Effekt zu minimieren, wird erfindungsgemäß eine Beschichtung der Oberfläche zumindest eines Teils der beteiligten Reibpartner vorgenommen. Beschichtet werden kann werden: eine oder beide Reib-Oberflächen 2' der Reibbeläge 2 und/oder die Reib-Oberfläche 3' der Anpressplatte und/oder die Reib-Oberfläche 4' des Schwungrades 4.

Die Beschichtung besteht erfindungsgemäß aus Silikon oder sie enthält Silikon.

Bei einem Silikon handelt es sich um eine Gruppe synthetischer Polymere, bei denen Siliziumatome über Sauerstoffatome zu Molekülketten und/oder netzartig verknüpft sind. Die restlichen freien Valenzelektronen des Siliziums sind dabei durch Kohlenwasserstoffreste (meist Methylgruppen) abgesättigt. Aufgrund ihres typisch anorganischen Gerüsts einerseits und ihren organischen Resten andererseits nehmen Silikone eine Zwischenstellung zwischen anorganischen und organischen Verbindungen ein, insbesondere zwischen den Silikaten und den organischen Polymeren. Sie sind daher in gewisser Weise Hybride und weisen ein besonderes Eigenschaftsspektrum auf, das andere Kunststoff nicht haben.

Einfache lineare Silikone sind nach dem Schema (R₂SiO)n aufgebaut und R₂SiO entspricht der allgemeinen Formel für Ketone R₂C=O. Da Si-O-Doppelbindungen jedoch nicht stabil sind, ist diese Ableitung rein formal. Si-O-Si-Bindungen, auf denen die Silikone beruhen, werden als Siloxanbindung bezeichnet. Silikone sind daher Polyorganosiloxane.

Zu den Silikonelastomeren sei folgendes angemerkt: Beispiele für derartige Stoffe sind Silikonkautschuk und Silikongummi als elastische Silikonelastomere. Silikonkautschuke sind in den gummielastischen Zustand überführte Massen, die als Grundpolymere Polydiorganosiloxane enthalten, die Vernetzungsreaktionen zugängliche Gruppen aufweisen.

Zu den Silikonharzen sei folgendes bemerkt: Die üblicherweise verwendeten Silikonharze sind vernetzte Polymethylsiloxane oder Polymethylphenylsiloxane, deren Elastizität und Wärmebeständigkeit mit dem Gehalt an Phenylgruppen steigt. Reine Methylsilikonharze sind relativ spröde und mäßig wärmebeständig. Die Dauerwärmebeständigkeit von Silikonharzen ist hoch. Ein Methylphenylsilikonharz kann 10.000 Stunden bei 200 °C beansprucht werden.

Das teilweise Versehen der zu beschichtenden Reib-Oberfläche erfolgt in der erläuterten Weise, wobei insbesondere der Siebdruck und der Tampondruck zum Einsatz kommt. Der Siebdruck ist hinlänglich bekannt. Der Tampondruck ist ein indirektes Druckverfahren nach dem Tiefdruckprinzip. Das Druckklischee trägt in seiner Oberfläche das zu druckende, tiefer liegende Druckbild. Die Rakel flutet die Beschichtung in das tiefer liegende Druckbild und rakelt die überschüssige Beschichtungsmasse sauber ab. Nach dem Rakeln fährt ein elastischer Drucktampon über das Klischee und nimmt über eine Hubbewegung die zurückgebliebene Beschichtungsmasse auf, um diese dann auf das zu beschichtende Teil zu übertragen, also indirekt zu beschichten.

Die nur teilweise (statt vollflächige) Beschichtung der Reibfläche/n ist vorliegend - unabhängig vom Beschichtungsmaterial - auch als eigenständige Erfindung zu verstehen, insbesondere in Kombination mit den vorgeschlagenen bevorzugten Beschichtungsverfahren.

In diesem Zusammenhang sei angemerkt, dass es sich bewährt hat, wenn nicht 100 % der Reibfläche 2', 3', 4', sondern nur ein Flächenanteil zwischen 15 % und 85 % beschichtet wird. Besonders bevorzugt liegt der Flächenanteil zwischen 25 % und 75 % der Gesamtfläche.

Vor dem Aufbringen der Beschichtungsmasse sollte diese für eine optimale Verarbeitung hinsichtlich ihrer Viskosität vorbehandelt werden. Hierbei bietet es sich an, ein Lösungsmittel einzusetzen.

Dies kann ein organisches Lösungsmittel sein, das allerdings umweltschädlich ist. Allerdings kann damit die Verarbeitbarkeit verbessert werden, und es ist eine Einstellbarkeit durch Wahl des Lösungsmittelgehalts möglich. Es erfolgt eine schnelle vorteilhafte Verdunstung des Lösungsmittels nach dem Auftrag.

Es kann auch Wasser als Lösungsmittel verwendet werden. Dies ist umweltfreundlich, allerdings muss das Silikon hierfür zumeist modifiziert werden. Auch ist die Verdunstung nach dem Auftrag langsamer. Weiterhin liegt eine Frostempfindlichkeit vor.

Es kann auch ganz ohne Lösungsmittel aufgetragen werden. Die Silikone sind teilweise im unvernetzten Zustand flüssig und eignen sich direkt für den Auftrag. Die Viskosität ergibt sich aus den eingesetzten Silikonen, häufig ist die Masse pastös. Der Einflussgrad auf die Viskosität ist hier allerdings beschränkt.

Nach dem Aufbringen der Beschichtung erfolgt ein Aushärten der Schicht.

Bei raumhärtendem Silikon (Aushärtung bei Zimmertemperatur) ist es vorteilhaft, dass keine besondere Anlage erforderlich ist. Allerdings sind relativ lange Trocknungszeiten (bis 40 Minuten) typisch, abhängig von der Luftfeuchtigkeit.

Bei der mehrkomponentigen Silikonbeschichtung werden mehrere Komponenten vermischt, wobei das Silikon durch eine chemische Reaktion aushärtet.

Bei der UV-Aushärtung wird die aufgebrachte Beschichtung mit UV-Licht bestrahlt. Die Aushärtung kann dabei sehr kurz sein (teilweise unter 20 Sekunden), was eine Flussfertigung ermöglicht.

Bei der Temperaturaushärtung härtet das Silikon durch Temperaturaktivierung (über Raumtemperatur) aus. Entsprechend Anlagen sind hierfür erforderlich.

### Bezugszeichenliste

- 1: Kupplungsvorrichtung
- 2: Reibbelag
- 2': Reib-Oberfläche des Reibbelags
- 3: Anpressplatte
- 3': Reib-Oberfläche der Anpressplatte
- 4: Schwungrad
- 4': Reib-Oberfläche des Schwungrads
- 5: Kupplungsgehäuse
- 6: Drehachse
- 7: Kupplungsscheibe

- µ: Reibwert
- N: Zahl der Lastwechsel / Kupplungsvorgänge

## Patentansprüche

1. Vorrichtung (1), bei der mindestens zwei Bauteile (2, 3, 4) bei bestimmungsgemäßem Gebrauch reibend zusammenwirken, um ein Drehmoment zu übertragen, insbesondere Reibungskupplung oder Bremse, wobei zur Verhinderung einlaufbedingter Schwankungen des Reibwerts mindestens eines der Bauteile (2, 3, 4) an ihrer der Reibung ausgesetzten Oberfläche (2', 3', 4') mit einer Beschichtung versehen ist,
**dadurch gekennzeichnet,**
**dass** die Beschichtung aus Silikon besteht oder Silikon enthält.

2. Vorrichtung nach Anspruch 1, **dadurch gekennzeichnet, dass** das Silikon ein Silikonelastomer ist.

3. Vorrichtung nach Anspruch 1, **dadurch gekennzeichnet, dass** das Silikon ein Silikonharz ist.

4. Vorrichtung nach einem der Ansprüche 1 bis 3, **dadurch gekennzeichnet, dass** eine Reibfläche (2') eines Reibbelags (2) der Vorrichtung (1) beschichtet ist.

5. Vorrichtung nach einem der Ansprüche 1 bis 4, **dadurch gekennzeichnet, dass** mindestens eine Gegenreibfläche (3', 4') des Reibbelags (3) beschichtet ist, insbesondere eine Anpressplatte (3) und/oder ein Schwungrad (4).

6. Vorrichtung nach einem der Ansprüche 1 bis 5, **dadurch gekennzeichnet, dass** die Beschichtung vollflächig auf die der Reibung ausgesetzten Oberfläche (2', 3', 4') des Bauteils (2, 3, 4) aufgebracht ist.

7. Vorrichtung nach einem der Ansprüche 1 bis 5, **dadurch gekennzeichnet, dass** die Beschichtung nur auf einen Teil der der Reibung ausgesetzten Oberfläche (2', 3', 4') des Bauteils (2, 3, 4) aufgebracht ist.

8. Verfahren zum Herstellen einer Vorrichtung (1), bei der mindestens zwei Bauteile (2, 3, 4) bei bestimmungsgemäßem Gebrauch reibend zusammenwirken, um ein Drehmoment zu übertragen, insbesondere einer Reibungskupplung oder einer Bremse, wobei zur Verhinderung einlaufbedingter Schwankungen des Reibwerts mindestens eines der Bauteile (2, 3, 4) an ihrer der Reibung ausgesetzten Oberfläche (2', 3', 4') mit einer Beschichtung versehen wird,
**dadurch gekennzeichnet,**
**dass** vor der Benutzung der Vorrichtung (1) eine Beschichtung aus Silikon oder eine Silikon enthaltende Beschichtung auf die Oberfläche (2', 3', 4') mindestens eines Bauteils (2, 3, 4) aufgebracht wird.

9. Verfahren nach Anspruch 8, **dadurch gekennzeichnet, dass** die Beschichtung nur auf einen Teil der der Reibung ausgesetzten Oberfläche (2', 3', 4') des Bauteils (2, 3, 4) aufgebracht wird.

10. Verfahren nach Anspruch 9, **dadurch gekennzeichnet, dass** die Beschichtung mittels Siebdruck aufgebracht wird.

11. Verfahren nach Anspruch 9, **dadurch gekennzeichnet, dass** die Beschichtung mittels Tampondruck aufgebracht wird.

12. Verfahren nach Anspruch 9, **dadurch gekennzeichnet, dass** die Beschichtung mittels einer profilierten Auftragwalze aufgebracht wird.

13. Verfahren nach einem der Ansprüche 8 bis 12, **dadurch gekennzeichnet, dass** das mit der Beschichtung versehene Bauteil (2, 3, 4) nach dem Auftragen der Beschichtung bei Raumtemperatur aushärtet.

14. Verfahren nach einem der Ansprüche 8 bis 12, **dadurch gekennzeichnet, dass** das mit der Beschichtung versehene Bauteil (2, 3, 4) nach dem Auftragen der Beschichtung einer Aushärtung bei gegenüber Raumtemperatur erhöhter Temperatur unterzogen wird.

15. Verfahren nach einem der Ansprüche 8 bis 12, **dadurch gekennzeichnet, dass** das mit der Beschichtung versehene Bauteil (2, 3, 4) nach dem Auftragen der Beschichtung einer Aushärtung durch Beaufschlagung mit UV-Licht unterzogen wird.

16. Verfahren nach einem der Ansprüche 8 bis 15, **dadurch gekennzeichnet, dass** auf die Oberfläche (2', 3', 4') des mindestens einen Bauteils (2, 3, 4) mindestens zwei unterschiedliche Beschichtungs-Komponenten aufgebracht werden, die miteinander eine chemische Reaktion eingehen.

17. Verfahren nach einem der Ansprüche 8 bis 16, **dadurch gekennzeichnet, dass** vor der Aufbringung der Beschichtung das Beschichtungsmaterial mit einem Lösungsmittel versehen wird.

18. Verfahren nach Anspruch 17, **dadurch gekennzeichnet, dass** das Lösungsmittel ein organisches Lösungsmittel ist.

19. Verfahren nach Anspruch 17, **dadurch gekennzeichnet, dass** das Lösungsmittel Wasser ist.
